# EUROPEAN PATENT APPLICATION

(11) **EP 3 486 546 A1**
(43) Date of publication of application: **22.05.2019**
(21) Application number: 17827756.2
(22) Date of filing: 14.07.2017
(51) Int. Cl.: F17C 1/00, H01M 8/04

(54) **PRESSURE CONTAINER FOR HYDROGEN AND METHOD FOR MANUFACTURING SAME**

(30) Priority: 15.07.2016 JP 2016140774
(71) Applicant: The Japan Steel Works, Ltd., Tokyo 141-0032 (JP)
(72) Inventor: ARASHIMA, Hironobu, Muroran-shi, Hokkaido 051-8505 (JP); WADA, Yoru, Muroran-shi, Hokkaido 051-8505 (JP); YANAGISAWA, Yusuke, Muroran-shi, Hokkaido 051-8505 (JP)
(74) Representative: Grünecker Patent- und Rechtsanwälte PartG mbB
(86) International application number: PCT/JP2017/025811
(87) International publication number: WO 2018/012633

(57) **Abstract**

The present invention provides a pressure container for hydrogen in which the development of cracking in the pressure container for hydrogen can be effectively inhibited and that is excellent in terms of safety, reliability, and durability. The present invention pertains to a pressure container for hydrogen in which a plastic region is present on the inner face side of a hydrogen pressure container main body, an elastic region is present on the outer face side, and compressive residual stress is generated on the inner face, wherein preferably: the equivalent plastic strain remaining on the inner surface of the hydrogen pressure container main body is 1% or below; the plastic region on the inner face side measures 50% or less of the wall thickness in the radial direction of the hydrogen pressure container main body; and the steel used has a tensile strength of at least 725 MPa.

## Description

### TECHNICAL FIELD

The present invention relates to a pressure vessel for hydrogen that can perform storage, transport, and accumulation of hydrogen, and can be used for a hydrogen station or the like, and a method of manufacturing the same.

### BACKGROUND ART

High strength low alloy steel is frequently used as a pressure vessel for hydrogen, storing hydrogen. It is known that the high strength low alloy steel exhibits hydrogen embrittlement behavior such as decrease in elongation and drawing, decrease in low cycle fatigue life, acceleration of fatigue crack propagation rate, and the like, by being in contact with high pressure hydrogen gas in a region where plastic deformation occurs.

In addition, in the related art, for the pressure vessel, an inner surface side of the vessel is plastically deformed so that compressive residual stress is applied to the inner surface side of the vessel by elastic restraint on an outer surface side of the vessel, a so-called autofrettage treatment is performed. As an effect on the autofrettage treated pressure vessel, it is known to inhibit occurrence of fatigue crack and a propagation of fatigue crack.

In PTLS 1 to 3, it is described that an autofrettage treatment is performed on a high pressure vessel. In addition, in PTLS 4 and 5, it is described that an autofrettage treatment is performed on members. In these PTLS, it is not described to perform the autofrettage treatment on a pressure vessel for hydrogen in any cases.

In the related art, there is no example illustrating the effect of autofrettage treatment of a vessel for high pressure hydrogen gas using high strength steel illustrating brittle behavior in the high pressure hydrogen gas, and the effect is unknown. In a case of subjecting the pressure vessel to autofrettage treatment, the autofrettage treatment plastically deforms the inner surface serving as a portion in contact with the high pressure hydrogen gas, so that there is concern on the effect due to hydrogen.

In addition, in PTLS 6 and 7, there are described that a fiber reinforced resin layer is wrapped around a vessel body, and the autofrettage treatment is performed on the vessel body. In these PTLs, the fiber reinforced resin layer is indispensable.

### CITATION LIST

### PATENT LITERATURE

PTL 1: JP-A-2004-28120
PTL 2: JP-A-2007-239853
PTL 3: JP-A-2007-198531
PTL 4: JP-T-2009-529113
PTL 5: JP-A-2011-99435
PTL 6: JP-A-2012-52588
PTL 7: WO 2004/51138 A1

### SUMMARY OF INVENTION

### TECHNICAL PROBLEM

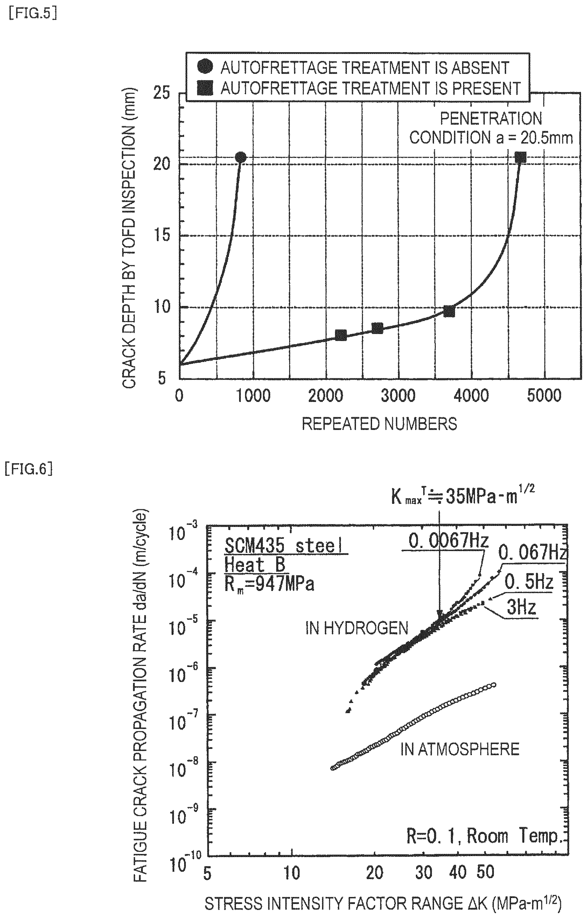

In high strength low alloy steel such as Cr-Mo steel and Ni-Cr-Mo steel normally used for the pressure vessel, in a case where a crack is present on an inner front surface, hydrogen environment embrittlement occurs by contacting hydrogen with a high stress crack tip end, and as illustrated in FIG. 6, a crack propagation rate is significantly accelerated compared to the atmospheric environment. Therefore, in the high pressure hydrogen gas environment, there is concern that fracture may occur earlier than in the atmosphere. In FIG. 6, in a case where defects (defects of the same size) having the same stress intensity factor range (horizontal axis) at the crack tip end are present on the inner front surface in the atmosphere and in hydrogen, it is known that the crack propagation rate in hydrogen develops by one order of magnitude or more faster than that in the atmosphere.

In addition, the high strength low alloy steel is known to exhibit embrittlement behavior in a high pressure hydrogen gas environment, and it is a well-known fact that there is a contribution of plastic deformation to the feature of fracture in hydrogen embrittlement. The embrittlement behavior appears more remarkably, especially in a large plastic deformation region.

In order to use the pressure vessel for hydrogen safely and in an economically superior state as facilities, it is necessary to inhibit crack propagation even in a high pressure hydrogen gas environment. As a technique for inhibiting the occurrence of crack and crack propagation, the above-described autofrettage treatment is generallyknown.

However, since the autofrettage treatment plastically deforms the inner surface side by applying a large internal pressure to the pressure vessel, in an accumulator using high strength low alloy steel used in high pressure hydrogen gas environment, the effect of inhibiting crack propagation is not always obtained in the same manner as in the atmospheric environment due to the effect of residual strain.

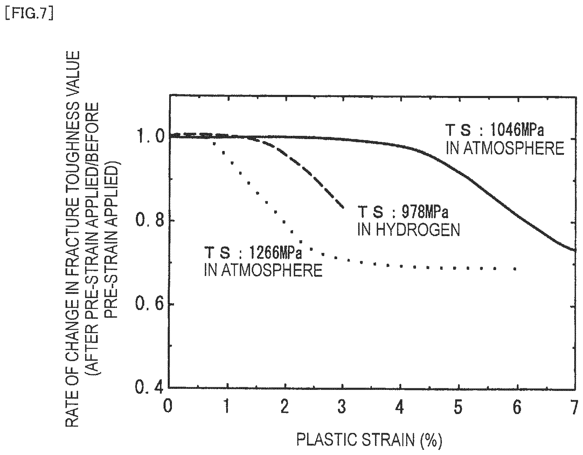

FIG. 7 illustrates a relationship between strain (plastic strain) and fracture toughness value, when the amount of strain increases, the fracture toughness value decreases even in the atmosphere, and the effect decreases with a small amount of strain as a tensile strength (TS) of the material is higher. On the other hand, in hydrogen gas, even for a material with a lower tensile strength than that in the atmosphere, the fracture toughness value decreases with a smaller amount of strain than that in the atmosphere. In the pressure vessel for hydrogen, it is known that the effect on fracture is different from the effect in the atmosphere.

In addition, in FIG. 7, as the plastic strain increases, the fracture toughness value decreases, and the smaller the tensile strength (TS) is, the greater the plastic strain necessary to decrease the fracture toughness value is. On the other hand, in hydrogen, the tensile strength is lower than that in the atmosphere, but the magnitude of the plastic strain at which the fracture toughness value decreases significantly decreases than that in the atmosphere.

Therefore, the present inventors understand the effect of strain in the high pressure hydrogen gas environment, and check the crack propagation behavior in the high pressure hydrogen gas environment in the vessel actually subjected to the autofrettage treatment, accordingly they accomplish the present invention.

The present invention has been made in view of the above circumstances, and an object thereof is to provide a pressure vessel for hydrogen which is capable of inhibiting crack propagation and is excellent in safety and durability, and a method of manufacturing the same.

### SOLUTION TO PROBLEM

Therefore, among pressure vessels for hydrogen of the present invention, the first illustrative aspect is a pressure vessel for hydrogen which is made of steel, wherein a compressive residual stress is present on an inner surface side of a pressure vessel body for hydrogen, and wherein an elastic region is provided on an outer surface side of the pressure vessel body for hydrogen.

The invention of the pressure vessel for hydrogen according to another illustrative aspect, in the present invention according to another illustrative aspect, wherein an equivalent plastic strain remaining on the inner front surface of the pressure vessel body for hydrogen is 1% or less.

The invention of the pressure vessel for hydrogen according to another illustrative aspect, in the present invention according to another illustrative aspect, wherein in a radial direction of the pressure vessel body for hydrogen, a plastic region on the inner surface side is 50% or less of a wall thickness.

The invention of the pressure vessel for hydrogen according to another illustrative aspect, in the present invention according to another illustrative aspect, wherein the steel used for the pressure vessel for hydrogen has a tensile strength of 725 MPa or more.

The invention of the pressure vessel for hydrogen according to another illustrative aspect, in the present invention according to another illustrative aspect, wherein the steel is a Cr-Mo steel, a Ni-Cr-Mo steel, or a Ni-Cr-Mo-V steel.

Among pressure vessels for hydrogen of the present invention, the first illustrative aspect is a method of manufacturing a pressure vessel for hydrogen which is made of steel, performing an autofrettage treatment by applying a pressure of an internal yield stress or higher of a pressure vessel body for hydrogen to an inside thereof; and applying a compressive residual stress to an inner surface of the pressure vessel body for hydrogen.

The method for manufacturing a pressure vessel for hydrogen according to another illustrative aspect, in the present invention according to another illustrative aspect, wherein after the pressure is unloaded, pressure is applied so that an equivalent plastic strain remaining on the inner front surface of the pressure vessel body for hydrogen is 1% or less.

The method for manufacturing a pressure vessel for hydrogen according to another illustrative aspect, in the present invention according to another illustrative aspect, wherein after the pressure is unloaded, the pressure is applied so that a plastic region on the inner surface side is 50% or less of a wall thickness in a radial direction of the pressure vessel body for hydrogen.

The technical matters defined in the present invention will be described below.

### (Autofrettage Treatment)

In the present invention, in an accumulator using a high strength low alloy steel illustrating a hydrogen embrittlement behavior by the effect of plastic deformation and illustrating a large crack propagation rate under high pressure hydrogen gas environment, by understanding the effect of the equivalent plastic strain in the high pressure hydrogen gas environment, the autofrettage treatment condition for the pressure vessel for hydrogen of the present invention is limited.

### [Equivalent Plastic Strain: 1% or less]

In the present invention, it is preferable that the equivalent plastic strain is 1% or less. The reason why the equivalent plastic strain is 1% or less is to set the pressure range which does not re-yield due to Bauschinger effect as autofrettage tension. If a material with a tensile strength of 1,046 MPa is used in the atmosphere (other than hydrogen), even if the equivalent plastic strain is approximately 4%, it is considered that an autofrettage effect can be obtained without decreasing the fracture toughness value. However, for hydrogen, if the equivalent plastic strain is 1% or less, it is considered that the autofrettage effect can be obtained without decreasing the fracture toughness value.

The equivalent plastic strain is obtained by measuring residual stress and converting the residual stress into the strain. The method of measuring the residual stress is not particularly limited, and typical examples thereof include an X-ray diffraction method and a magnetostriction method. In addition, it is possible to calculate the magnitude of the equivalent plastic strain by measuring the strain on an outer surface and the dimension of the inner and outer surfaces before and after the autofrettage treatment and by analyzing them.

When the crack is artificially introduced to the inner front surface of an accumulator vessel that stores high pressure hydrogen inside and a fatigue test is repeated, in a case of small crack, the crack propagation was observed by the repeat in the vessel not subjected to the autofrettage treatment, and the crack propagation was not observed in the vessel subjected to the autofrettage treatment. Furthermore, when the fatigue test was performed by introducing the crack large enough to ensure that the crack propagated, it was described that the number of times of the vessel subjected to the autofrettage treatment until the crack propagated and penetrated was several times longer than that of the vessel not subjected to the autofrettage treatment. From these results, it was proved by the demonstration test using the simulated specimen that an inhibiting effect of crack propagation can be obtained by performing the autofrettage treatment.

### [Plasticity Rate: 50% or less]

Since the autofrettage effect can be exerted on the pressure vessel for hydrogen, in the present invention, it is preferable that the autofrettage treatment condition is a plasticity rate of 50% or less. In the present invention, the plasticity rate refers to a wall thickness ratio of a plastic region to the pressure vessel for hydrogen in a standard in the radial direction of the pressure vessel for hydrogen. That is, the plastic region on the inner surface side in the radial direction of the pressure vessel body for hydrogen is set to 50% or less of the wall thickness.

If the plasticity rate exceeds 50% and the elastic region narrows, the tightening from the outside is weak and it is unlikely to generate sufficient compressive residual stress. The plasticity rate is preferably 10% or more for the purpose of applying effective compressive residual stress.

### [High Strength Low Alloy Steel: Tensile Strength 725 MPa or higher]

The steel used for the pressure vessel for hydrogen of the present invention (for example, Cr-Mo steel, Ni-Cr-Mo steel, Ni-Cr-Mo-V steel) preferably has a tensile strength of 725 MPa or higher. If the strength decreases, since the effect of hydrogen embrittlement decreases, even if the plastic strain increases, it is considered that the decrease in fracture toughness value due to the effect of hydrogen is reduced, and the difference between the atmosphere and hydrogen in the autofrettage effect also is reduced. Since the effect of hydrogen on steel is brittle as the strength is higher, it is preferable to provide a minimum value of tensile strength. The tensile strength can be measured based on JIS Z2241 (2011) "Metal material tensile test method".

### ADVANTAGEOUS EFFECTS OF INVENTION

That is, according to the present invention, it is possible to provide the pressure vessel for hydrogen in which the compressive residual stress is generated on the inner surface by providing the plastic region on the inner surface side and the elastic region on the outer surface side of the pressure vessel body for hydrogen, the crack propagation on the inner surface of the pressure vessel body for hydrogen can be effectively inhibited in the high pressure hydrogen gas, and which is excellent in safety, reliability, and durability. In addition, by using the high strength low alloy steel as the material of the pressure vessel, the wall thickness can be reduced and the weight of the pressure vessel can be reduced.

The above plastic region and elastic region can be determined by performing a known analysis in the related art, or determined by, for example, a Sachs method measuring the strain value released while scraping the vessel.

In addition, the method of measuring the compressive residual stress is not particularly limited similarly to the measurement of the residual stress, and typical examples thereof include the X-ray diffraction method and the magnetostriction method.

### BRIEF DESCRIPTION OF DRAWINGS

FIG. 1 is a diagram illustrating a process of manufacturing a pressure vessel for hydrogen and the pressure vessel for hydrogen according to an embodiment of the present invention.
FIG. 2 is a schematic diagram of a pressure vessel used for verifying an inhibiting effect of crack propagation in hydrogen gas in an example.
FIG. 3 is a drawing substitute photograph illustrating a fracture surface as a result of confirming the inhibiting effect of crack occurrence and propagation in hydrogen gas in the example.
FIG. 4 is a drawing substitute photograph illustrating the fracture surface as a result of propagating the crack in hydrogen gas by increasing an initial crack size in order to confirm the inhibiting effect of crack propagation in the example.
FIG. 5 is a graph illustrating a graph comparing the number of times till penetration in a crack propagation test of FIG. 4.
FIG. 6 is a graph comparing crack propagation rates in atmosphere and hydrogen in high strength low alloy steel.
FIG. 7 is a graph illustrating a relationship between a magnitude of plastic strain and a fracture toughness value.

### DESCRIPTION OF EMBODIMENTS

The present invention relates to a pressure vessel for hydrogen, which is a steel pressure vessel for hydrogen, and has a compressive residual stress on an inner surface side of a pressure vessel body for hydrogen and an elastic region on an outer surface side. Hereinafter, an embodiment of the present invention will be described with reference to the drawings.

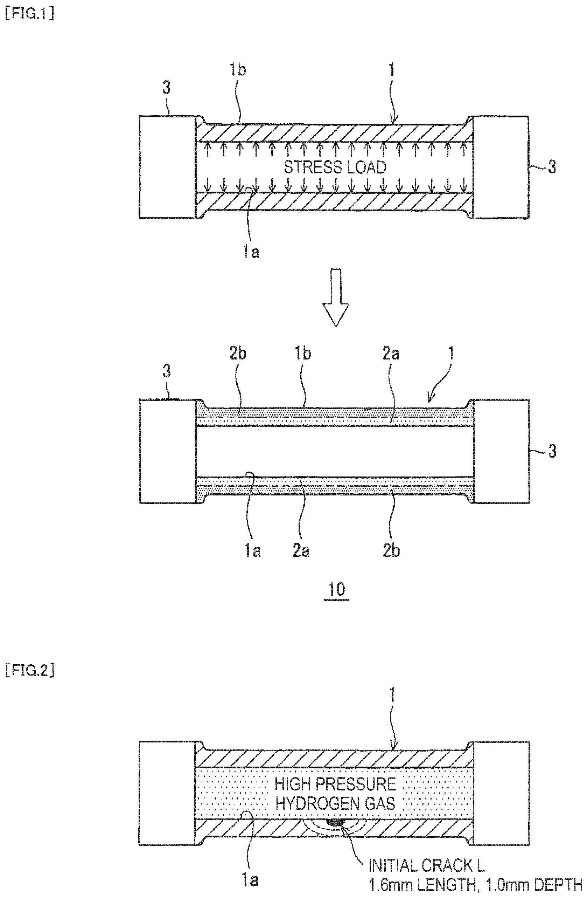

As illustrated in FIG. 1, the pressure vessel 10 for hydrogen of the present embodiment includes a pressure vessel body 1 made of a steel cylindrical cylinder and a lid 3 for tightly closing both end portions of the pressure vessel body 1 so as to be opened and closed. The configuration of the lid 3 can be provided with various configurations.

The material of the pressure vessel body 1 and the lid 3 is not particularly limited, and as the material of the pressure vessel body 1, manganese steel, chromium molybdenum steel (Cr-Mo steel), nickel chromium molybdenum steel (Ni-Cr-Mo steel), nickel chromium molybdenum vanadium steel (Ni-Cr-Mo-V steel), other low alloy steel, or the like can be used. The Cr-Mo steel, the Ni-Cr-Mo steel, or the Ni-Cr-Mo-V steel is preferable.

Cr is an element which improves hardenability, strength, abrasion resistance, corrosion resistance, and the like. Mo is an element which improves hardenability, strength, corrosion resistance, and inhibits grain coarsening and temper embrittlement. Ni is an element which improves hardenability, toughness, and corrosion resistance. V is an element which improves hardenability and refines grain size to improve strength, toughness, and the like. Alloy steel containing these elements have high strength. When the strength of the alloy steel is high, the wall thickness of the pressure vessel can be made thin, so that a lightweight and compact pressure vessel can be obtained.

It is preferable that a tensile strength of the above steel is 725 MPa or higher. It is more preferably 795 MPa or higher, and still more preferably 825 MPa or higher. In addition, it is preferably 1,205 MPa or less, and more preferably 1,100 MPa or less.

The material of the lid 3 may be the same material as that of the pressure vessel body 1 or may be made of other materials. Furthermore, members made of different materials can be used for each member of the lid 3. The materials of the pressure vessel body 1 and the lid 3 are not limited to the above.

The pressure vessel body 1 is formed in a tubular shape with steel. A manufacturing method thereof is not particularly limited, a processing method with fewer defects is preferable, and for example, it is integrally formed by forging or extrusion. The size of the pressure vessel body 1 is not particularly limited, and it is preferably one having an internal volume of 20 liters or more, and the total length is preferably 6,000 mm or less.

By having the internal volume of 20 liters or more, a sufficient amount of hydrogen can be accumulated. In addition, the total length of the pressure vessel body 1 is preferably not too long for reasons such as installation in a narrow area such as an urban area. Therefore, it is preferable to set the total length to 6,000 mm or less.

In addition, since the inner diameter of the pressure vessel body 1 varies depending on the inner volume and the total length, it is not limited to a specific range, and the inner diameter is preferably, for example, 180 mm or higher. In a case of performing a penetration treatment or development treatment of a penetrant flaw detection method, for example, at the time of direct inspection of the inner surface, the reason is that such an opening diameter is required. In addition, the wall thickness of the pressure vessel body 1 is not particularly limited. The wall thickness can be determined in consideration of the load shared by the pressure vessel body 1.

In the pressure vessel body 1, it is preferable that an inner surface 1a is mirror-finished so as to be free of defects. A hollow portion of the pressure vessel body 1 is formed in a straight cylindrical shape at the portion having the inner surface 1a, and mirror finishing can be easily performed. The inner surface 1a is a portion to which the pressure of accumulated hydrogen is loaded.

It is preferable to prevent the crack propagation due to hydrogen embrittlement by the mirror finishing to have a surface shape not having defects of 0.5 mm in depth and 1.6 mm or higher in surface length in the wall thickness direction. If a defect exceeding this size is left on the inner surface of the pressure vessel body 1, a crack due to hydrogen embrittlement is likely to propagate and fatigue crack life is reduced. However, depending on the shape of the pressure vessel body or the like, the pressure vessel body having the above defect or more may be permitted.

The present invention relates to a method of manufacturing a pressure vessel for hydrogen, which is a method of manufacturing a steel pressure vessel for hydrogen, in which a pressure of an internal yield stress or higher of the pressure vessel body for hydrogen is applied to the inside to perform an autofrettage treatment, and the compressive residual stress is applied to the inner surface of the pressure vessel body for hydrogen.

For the pressure vessel body 1, the pressure is applied from the inner surface side to perform the autofrettage treatment. In the autofrettage treatment, the pressure vessel body 1 expands in the outer peripheral direction and plastically deforms only on the inner surface side, so that residual stress remains on the inner surface side after depressurization, and the strength increases.

In the autofrettage treatment, the pressure is applied to the inside to such an extent that the inner surface of the pressure vessel body 1 is partially yielded (internal yield stress or higher). Internal pressure loading is normally performed by water pressure, and the medium of pressure is not particularly limited.

In the autofrettage treatment, as illustrated in FIG. 1, the compressive residual stress is generated on the inner surface 1a side of the pressure vessel body 1, and compressive strain remains on the inner surface 1a side. For the internal pressure condition to be applied, as the compressive strain, the internal pressure is adjusted so that the equivalent plastic strain is 1% or less after the pressure is unloaded. It is preferably 0.5% or less, and more preferably 0.4% or less. As a result, the inner surface 1a side becomes a plastic region 2a and an outer surface 1b side becomes an elastic region 2b.

In the standard in the radial direction of the pressure vessel for hydrogen, using the wall thickness ratio of the plastic region 2a to the pressure vessel for hydrogen as a plasticity rate, it is preferable that the plasticity rate after the pressure is unloaded is 50% or less, and the elastic region 2b is 50% or more of the wall thickness. The plasticity rate is more preferably set to 40% or less. In addition, it is preferably 10% or more, and more preferably 20% or more. The plasticity rate is adjusted by internal pressure in the autofrettage treatment. The internal pressure is set so as to obtain the above characteristics in consideration of material characteristics, pressure vessel size, and the like.

The pressure vessel for hydrogen of the embodiment can be used for applications such as an automobile using hydrogen as a hydrogen station.

For example, assuming that 54 fuel cells are filled in fuel cell hydrogen vehicles, an accumulator for 82 MPa hydrogen station (compressed hydrogen stand) that supplies hydrogen is subjected to repeated internal pressure of 54 per day, 19,710 times per year, and 295,650 times in 15 years. In order to ensure such durability, the pressure vessel for hydrogen of the present embodiment realizes high strength and light weight, and can provide absolute safety and high reliability in a hydrogen station installed in an urban area or the like.

### Example

Using a high strength low alloy steel Ni-Cr-Mo-V steel (C: 0.27%, Si: 0.06%, Mn: 0.30%, Ni: 3.6%, Cr: 1.7%, Mo: 0.5%, V: 0.08%, with a balance being Fe and unavoidable impurities, a cylindrical specimen of the example subjected to the autofrettage treatment and a cylindrical specimen not subjected to the autofrettage treatment as a comparative example were prepared, and cycle tests in a high pressure hydrogen gas environment simulating an accumulator were performed. As a result of performing the autofrettage treatment at a pressure of 380 MPa with an inner and outer diameter ratio of 1.6, the circumferential strain generated on an inner front surface was approximately 0.3%, and approximately 40% of the wall thickness from the inner front surface became the plastic region (plasticity rate: approximately 40%).

As illustrated in FIG. 2, an artificial defect having a length of 1.6 mm, a depth of 1.0 mm, and a width of 0.2 mm (initial crack L illustrated in FIG. 2) was introduced into the inner surface of the cylindrical specimen (pressure vessel body 1 illustrated in FIG. 2) by electric discharge machining, and the behavior of fatigue crack propagation in hydrogen gas environment was confirmed with the presence or absence of autofrettage treatment.

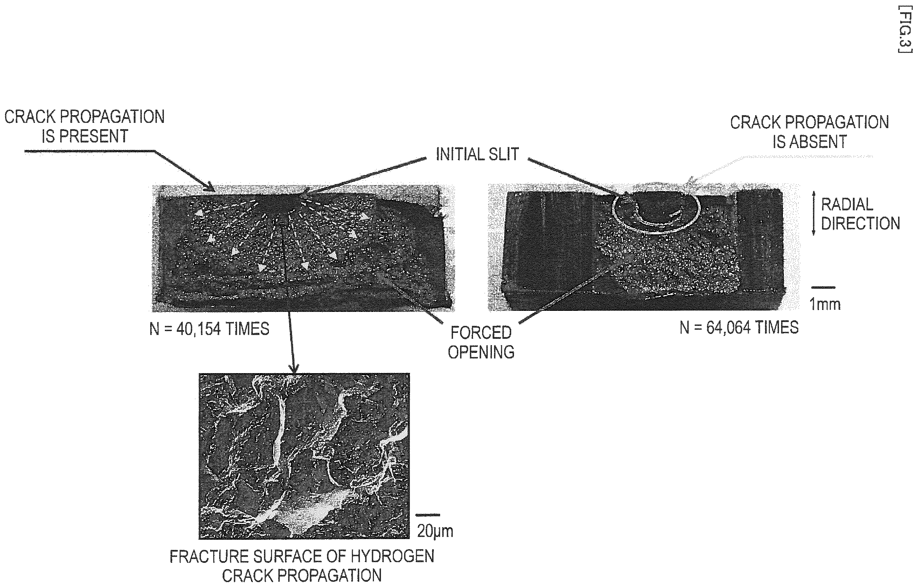

The crack propagation length was confirmed by periodically performing an ultrasonic flaw detection test by TOFD method. It was confirmed that the specimen not subjected to the autofrettage treatment showed large crack propagation at 40,154 times. On the other hand, in the specimen subjected to the autofrettage treatment, no crack propagation was observed at 40,154 times, and thereafter repetition cycles of approximately 24,000 more times were applied, and the ultrasonic flaw detection test could not catch cracks even when it reached 64,064 times. The fracture surface of specimen not subjected to the autofrettage treatment was opened after 40,154 times of cycle tests, and that of specimen subjected to the autofrettage treatment was opened after 64,064 times of cycle tests. The results of observation on crack propagation using an electron microscope are also illustrated in FIG. 3. In the specimen not subjected to the autofrettage treatment, a hydrogen crack with a semi-elliptical shape was observed to propagate from the artificial defect introduced as the initial crack, but in the specimen subjected to the autofrettage treatment, crack propagation was not observed even though the number of cycles was large.

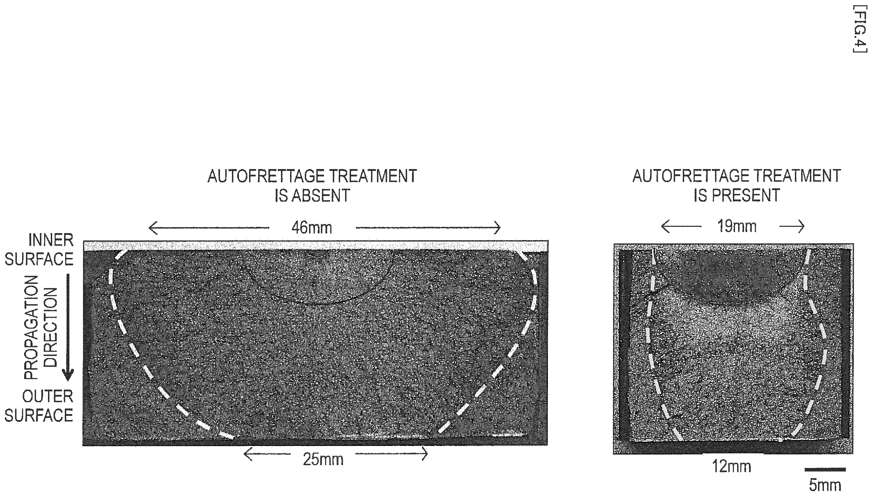

In the specimen subjected to the autofrettage treatment, if the size of the artificial defect introduced at the beginning is small, it is necessary to apply a significantly enormous cycle in order to propagate the crack. Therefore, even in the specimen subjected to the autofrettage treatment, the cycle test was performed by increasing the size of the initial artificial defect to be introduced so that the crack propagation was observed, and the results of confirming the behavior of fatigue crack propagation in a 90 MPa hydrogen gas environment by fracture surface observation is illustrated in FIG. 4. As a comparative example, the behavior of fatigue crack propagation in the hydrogen gas environment was also investigated using specimens not subjected to autofrettage treatment taken from the same material. The size of the introduced artificial defect is a length of 3.0 mm and a depth of 1.0 mm for the specimen not subjected to the autofrettage treatment, and a length of 18.0 mm and a depth of 6.0 mm for the specimen subjected to the autofrettage treatment.

In the specimen not subjected to the autofrettage treatment, the specimen is elongated in a semi-elliptical shape, whereas in the specimen subjected to the autofrettage treatment, the crack propagation on the inner front surface is inhibited by the effect of the compressive residual stress on the inner front surface, and the specimen only propagated in the depth direction. The semi-elliptical dashed line on the fracture surface in FIG. 4 illustrates the size of 18.0 mm length and 6.0 mm depth.

FIG. 5 illustrates the results obtained by calculation and actual measurement of the change in the crack propagation due to the presence or absence of the autofrettage treatment when the size of the initial crack is set to 18.0 mm length and 6.0 mm depth. It was described that the specimen subjected to the autofrettage treatment required 5 times or more the number of cycles until a crack of 6.0 mm depth reached the depth of 20.5 mm and penetrated, compared to the specimen not subjected to the autofrettage treatment. Even in the high pressure hydrogen gas, in the specimen subjected to the autofrettage treatment, since the crack propagation on the inner front surface having the compressive residual stress was inhibited, the crack size was small and the crack propagation was slow even on the outer surface side where tensile residual stress remained, compared to the specimen not subjected to the autofrettage treatment.

Hereinbefore, although the present invention has been described based on the above embodiments and examples, the present invention is not limited to the description in the above embodiments and examples, and appropriate modifications can be made in the above embodiments and examples without departing from the scope of the present invention.

While the present invention has been described in detail using specific embodiments, it will be apparent to those skilled in the art that various modifications and variations are possible without departing from the spirit and scope of the present invention. This application is based on Japanese Patent Application (Japanese Patent Application No. 2016-140774) filed on July. 15, 2016, the entirety of which is incorporated by reference.

### REFERENCE SIGNS LIST

- 1: pressure vessel body
- 1a: inner surface
- 1b: outer surface
- 2a: plastic region
- 2b: elastic region
- 3: lid
- 10: pressure vessel for hydrogen

## Claims

1. A pressure vessel for hydrogen which is made of steel,
wherein a compressive residual stress is present on an inner surface side of a pressure vessel body for hydrogen, and
wherein an elastic region is provided on an outer surface side of the pressure vessel body for hydrogen.

2. The pressure vessel for hydrogen according to claim 1, wherein an equivalent plastic strain remaining on an inner front surface of the pressure vessel body for hydrogen is 1% or less.

3. The pressure vessel for hydrogen according to claim 1 or 2, wherein in a radial direction of the pressure vessel body for hydrogen, a plastic region on the inner surface side is 50% or less of a wall thickness.

4. The pressure vessel for hydrogen according to any one of claims 1 to 3, wherein the steel used for the pressure vessel for hydrogen has a tensile strength of 725 MPa or more.

5. The pressure vessel for hydrogen according to claim 4, wherein the steel is a Cr-Mo steel, a Ni-Cr-Mo steel, or a Ni-Cr-Mo-V steel.

6. A method of manufacturing a pressure vessel for hydrogen which is made of steel, the method comprising:
performing an autofrettage treatment by applying a pressure of an internal yield stress or higher of a pressure vessel body for hydrogen to an inside thereof; and
applying a compressive residual stress to an inner surface of the pressure vessel body for hydrogen.

7. The method of manufacturing a pressure vessel for hydrogen according to claim 6, wherein after the pressure is unloaded, pressure is applied so that an equivalent plastic strain remaining on the inner front surface of the pressure vessel body for hydrogen is 1% or less.

8. The method of manufacturing a pressure vessel for hydrogen according to claim 6 or 7, wherein after the pressure is unloaded, the pressure is applied so that a plastic region on the inner surface side is 50% or less of a wall thickness in a radial direction of the pressure vessel body for hydrogen.
